(19)

Europäisches
Patentamt
European
Patent Office
Office européen
des brevets

(11) **EP 2 605 597 A1**

(12) **EUROPEAN PATENT APPLICATION**

published in accordance with Art. 153(4) EPC

(43) Date of publication:
**19.06.2013  Bulletin 2013/25**

(21) Application number: **11816084.5**

(22) Date of filing: **05.08.2011**

(51) Int Cl.:
***H04W 52/00*** (2009.01)

(86) International application number:
**PCT/CN2011/078086**

(87) International publication number:
**WO 2012/019526 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2010  CN 201010250487**

(71) Applicant: **China Academy of
Telecommunications Technology
Haidian District
Beijing 100191 (CN)**

(72) Inventors:
• **SHEN, Zukang
Beijing 100191 (CN)**
• **PAN, Xueming
Beijing 100191 (CN)**
• **YANG, Xiaodong
Beijing 100191 (CN)**

(74) Representative: **Lantos, Mihaly et al
DANUBIA Patent and Law Office LLC
POB 198
1368 Budapest (HU)**

(54) **METHOD AND DEVICE FOR REPORTING AND OBTAINING POWER HEADROOM**

(57)    Disclosed are a method and device for reporting and obtaining power headroom. The method comprises: user equipment (UE) configuring a maximum transmit power (Pcmax); the UE using the Pcmax to calculate power headroom (PH); and the UE reporting the Pcmax and the PH to a base station. In embodiments of the present invention, the UE uses configured Pcmax to calculate power headroom (PH) and reports the Pcmax and the PH to the base station, so that the base station obtains the Pcmax and the PH at the same time, and thus the base station can use the PH accurately according to the Pcmax.

```
┌──────────────────────────────────────────┐
│ The UE configures a maximum transmission power │  101
│                   Pcmax                    │
└──────────────────────────────────────────┘
                     │
                     ▼
┌──────────────────────────────────────────┐
│ The UE calculates transmission power headroom │  102
│           (PH) by using the Pcmax           │
└──────────────────────────────────────────┘
                     │
                     ▼
┌──────────────────────────────────────────┐
│ The UE reports the Pcmax and the PH to a base │  103
│                  station                   │
└──────────────────────────────────────────┘
```

**Figure 1**

**Description**

The application claims the following priority of Chinese patent application:

It claims the priority to the Chinese Patent Application No. 2010102504870 titled "Method and Device for Reporting and Obtaining Power Headroom" filed to the Patent Office of the People's Republic of China on August 11, 2010.

**Field of the Invention**

The present invention relates to the communication field, in particular to the method and device for reporting and obtaining power headroom.

**Background of the Present Invention**

A calculation formula of a transmission power of PUSCH (Physical Uplink Shared Channel) of equipment is defined in 3GPP Rel-8:

$$P_{\text{PUSCH}}(i) = \min\{P_{\text{CMAX}}, 10\log_{10}(M_{\text{PUSCH}}(i)) + P_{\text{O\_PUSCH}}(j) + \alpha(j) \cdot PL + \Delta_{\text{TF}}(i) + f(i)\} \quad [\text{dBm}]$$

Wherein, $P_{\text{CMAX}}$ represents the maximum transmission power configured for UE (User Equipment), $M_{\text{PUSCH}}(i)$ refers to the number of PRBs (Physical Resource Block) of the UE's PUSCH transmitted in a subframe i, $P_{\text{O\_PUSCH}}(j)$ is determined by an uplink power control parameter and the type of the transmitted signal, $\alpha(j)$ represents partial pathloss compensation factor, PL refers to an estimated pathloss by the UE, $\Delta_{\text{TF}}(i)$ is configured by a high-level parameter and is related to transmission format of the UE, $f(i)$ is determined by the transmit power control command (TPC command) received by the UE.

To facilitate the base station to determine whether a UE reaches its maximum transmit power, a reporting mechanism of PH (Power Headroom) of a UE is defined in 3GPP Rel-8. The PH(i) of subframe i is obtained by the following formula:

$$PH(i) = P_{\text{CMAX}} - \left\{ 10\log_{10}(M_{\text{PUSCH}}(i)) + P_{\text{O\_PUSCH}}(j) + \alpha(j) \cdot PL + \Delta_{\text{TF}}(i) + f(i) \right\}$$

Wherein, all parameters for calculating PH(i) are the same as those of PUSCH transmission power of a UE. After obtaining the PH of a UE, the base station can determine how much power headroom the UE has to transmit PUSCH on more PRBs.
In 3 GPP Rel-8, $P_{\text{CMAX}}$ is configured by a UE within the following value range:

$$P_{\text{CMAX\_L}} \leq P_{\text{CMAX}} \leq P_{\text{CMAX\_H}}$$

Wherein:

$$P_{\text{CMAX\_L}} = \text{MIN}\{P_{\text{EMAX}} - T_{\text{C}}, \quad P_{\text{PowerClass}} - \text{MPR} - \text{A-MPR} - T_{\text{C}}\},$$

$$P_{\text{CMAX\_H}} = \text{MIN}\{P_{\text{EMAX}}, \quad P_{\text{PowerClass}}\},$$

$P_{\text{EMAX}}$ is configured by high layers.
$P_{\text{PowerClass}}$ refers to a power class of the UE.

The value of MPR (Maximum Power Reduction) and A-MPR (Additional Maximum Power Reduction) are specified by the specification.
$T_{\text{C}}$ is determined by the used frequency band.

The measured UE transmission power should be in the following range:

$$P_{CMAX\_L} - T(P_{CMAX\_L}) \leq P_{UMAX} \leq P_{CMAX\_H} + T(P_{CMAX\_H})$$

Wherein, T(PCMAX) refers to an allowable error range defined in the specification.

In the definition of $P_{CMAX}$, MPR and A-MPR are determined by factors such as application scenario (such as the frequency band range), UE's current modulation mode for PUSCH, and UE's current PUSCH transmission resource allocation. Particularly, value of the MPR and A-MPR can be different for different UE implementations. Thus, the base station cannot obtain the exact values of the MPR and the A-MPR of each UE in 3GPP Rel-8. When the UE reports PH to the base station according to the current subframe, the PH is calculated based on the $P_{CMAX}$ of the current subframe. If the UE changes the value of $P_{CMAX}$ in the next time when the base station schedules PUSCH transmission of the UE, the base station cannot obtain the accurate power headroom of the UE.

3GPP LTE-A supports the following features: non-continuous PUSCH resource allocation on a carrier; simultaneous transmission of PUSCH and PUCCH (Physical Uplink Control Channel) on a carrier; and simultaneous transmission of PUSCH on multiple carriers with carrier aggregation. Larger values of MPR and A-MPR are required to support these three features. Hence, the value range of $P_{CMAX}$ configured for the UE can be larger than 3GPP Rel-8. Furthermore, the PH obtained by the base station according to the current method of UE power headroom reporting can largely differ from the real PH, and the base station cannot use the PH reported by the UE accurately. However, the base station can further determine the PH of the UE according to the Pcmax reported by the UE if it can acquire the Pcmax corresponding to the PH, so as to use the PH accurately. Therefore, it is required to provide a method that the base station can obtain PH and the corresponding Pcmax of the UE.

## Summary of the Invention

The embodiments of the present invention illustrate a method and device for reporting and obtaining power headroom. The UE will report PH and Pcmax at the same time so that the base station can obtain Pcmax and PH simultaneously and is able to use PH accurately.

The embodiments of the present invention provide a method for reporting power headroom, which comprises:

A UE configures the maximum transmission power (Pcmax);
The UE calculates the transmission power headroom (PH) by using the Pcmax;
The UE reports the Pcmax and the PH to a base station.

The embodiments of the present invention provide a device for reporting power headroom, which comprises:

A configuration module for configuring the maximum transmission power (Pcmax);
A calculation module for calculating the transmission power headroom (PH) using the Pcmax;
A reporting module for reporting the Pcmax and the PH to a base station.

The embodiments of the present invention provide a method for obtaining power headroom, which comprises:

A base station receives a PH report message sent by a UE and obtains the PH and the Pcmax carried in the PH report message.

The embodiments of the present invention provide a base station equipment, which comprises:

A receiving module for receiving the PH report message sent by a user terminal;

An acquisition module for acquiring the PH and the Pcmax carried in the PH report message.

Compared with the present technology, the embodiments of the present invention at least possess the following advantages:

The UE calculates the PH by using the configured Pcmax and reports the Pcmax and the PH to the base station so that the base station can obtain the Pcmax and the PH at the same time. The base station can use the PH accurately according to the Pcmax reported by the UE if the UE changes the value of Pcmax in the next time when the base station schedules UE.

## Brief Description of the Drawings

To more clearly explain the technical proposal in the embodiments of the present invention or present technology, attached figures required for the description of the embodiments of the present invention or present technology are illustrated below. Obviously, the figures described below only represents some embodiments of the present invention, and for ordinary technicians of this field, they can also obtain other figures based on these attached figures without creative work.

Fig. 1 is a flow diagram of the method for reporting power headroom provided in the embodiment I of the present invention;

Fig. 2 is a structural diagram of the device for reporting power headroom provided in the embodiment VII of the present invention;

Fig. 3 is another structural diagram of the device for reporting power headroom provided in the embodiment VII of the present invention;

Fig. 4 is a flow diagram of the method for reporting power headroom provided in the embodiment VIII of the present invention;

Fig.5 is a structural diagram of a base station equipment provided in the embodiment IX of the present invention.

## Detailed Description of Preferred Embodiments

The technical solutions in the present invention are explained in a clear and complete way with reference to the figures in the present invention. Obviously, the embodiments described herein below are only part of embodiments of the present invention rather than all. All other embodiments gained by those skilled in the art on the basis of the embodiments in the present invention without any creative work shall fall within the protection scope of the present invention.

Embodiment I

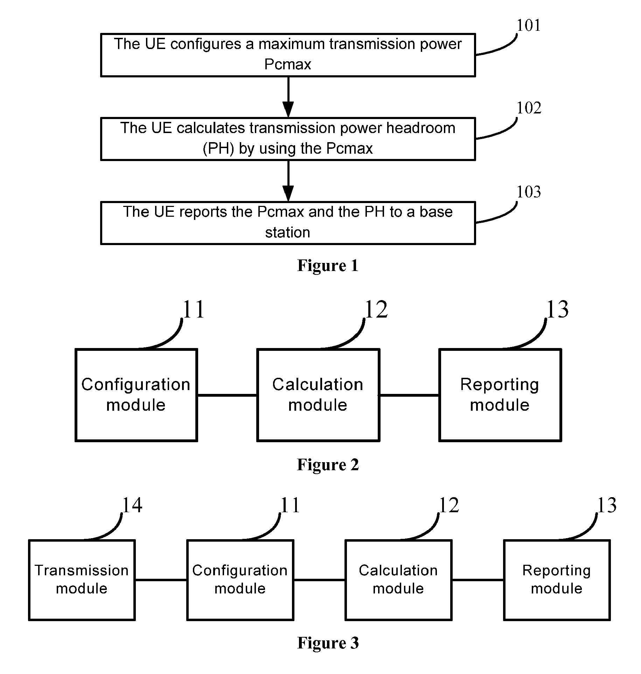

The embodiment I of the present invention provides a method for reporting power headroom, as shown in Fig. 1, which comprises:

Step 101, the User Equipment (UE) configures a maximum transmission power Pcmax.
Specially, the UE determines the value of Pcmax in any of the following ways:

The UE determines the value of Pcmax according to a physical uplink sharing channel (PUSCH) resource allocated in a reference subframe on a carrier;

The UE determines the value of Pcmax according to a PUSCH resource and a physical uplink control channel (PUCCH) resource allocated in a reference subframe on a carrier; the UE transmits signals on the PUCCH and/or the PUSCH;

The UE determines the value of Pcmax according to a PUSCH resource allocated in a reference subframe on a carrier and a PUSCH resource allocated on at least another carrier in the reference subframe; the UE transmits signals on the PUCCH and/or the PUSCH;

The UE determines the value of Pcmax according to a PUSCH resource allocated in a reference subframe on at least two carriers.

Step 102, the UE calculates transmission power headroom (PH) by using the Pcmax.
The PH is obtained specially by subtracting the transmission power of a PUSCH from the Pcmax, and the PUSCH is transmitted on one or more carriers.
The PH can also be obtained by subtracting the transmission power of a PUSCH and a PUCCH from the Pcmax, and the PUCCH and the PUSCH are transmitted on one or more carriers.

Step 103, the UE reports the Pcmax and the PH to a base station.
The Pcmax and the PH are determined according to the same subframe, and the UE reports the Pcmax and the PH to the base station through the same subframe.
Resource of a PUSCH at least comprises the size and the frequency domain position of the PUSCH;
Resource of a PUCCH at least comprises the size and the frequency domain position of the PUCCH.

Embodiment II

The embodiment II of the present invention provides a method for reporting power headroom and a UE supports non-continuous resource allocation on the same carrier.
As for a UE supporting non-continuous resource allocation on the same carrier, the value of MPR and A-MPR can be different for different non-continuous allocations according to specific UE implementations. For example, the UE is allocated on two clusters of PRB resource respectively from PRB x to PRB x+n and from PRB y to PRB y+m to transmit PUSCH on a subframe i, the UE sets $P_{CMAX}$ value as $P_{CMAX}(i)$ accordingly. If the UE calculates a PH based on the subframe i, then $PH(i) = P_{CMAX}(i) - P_{PUSCH}(i)$, wherein $P_{PUSCH}(i)$ represents the PUSCH transmission power of the UE in the subframe i. UE reports $P_{CMAX}(i)$ together with PH(i) at the same time.

Embodiment III

The embodiment III of the present invention provides a method for reporting power headroom and a UE supports simultaneous transmission of a PUCCH and a PUSCH on the same carrier.
As for a UE supporting to transmit signals on PUCCH and PUSCH at the same time on the same carrier, the value of MPR and A-MPR can be different for different combinations of the PUCCH resource and the PUSCH resource according to specific UE implementations. For example, the UE transmits PUCCH on PRB x and transmits PUSCH from PRB y to PRB y+m in a subframe i, the UE sets $P_{CMAX}$ value as $P_{CMAX}(i)$ accordingly. If the UE calculates a PH based on the subframe i, then $PH(i)=P_{CMAX}(i) - P_{PUSCH}(i) - P_{PUCCH}(i)$, wherein $P_{PUSCH}(i)$ represents the PUSCH transmission power in the subframe i and $P_{PUCCH}(i)$ represents the PUCCH transmission power of the UE in the subframe i. UE reports $P_{CMAX}(i)$ together with PH(i) at the same time.
It shall be noted that the PUCCH and/or the PUSCH can be virtual. That is to say, the UE may only transmit signals on the PUCCH or the PUSCH, or on both of them. Nevertheless, the UE still determines the value of Pcmax according to the allocated resources for the PUCCH and the PUSCH.
If UE only transmits signals on a PUCCH and the PUSCH is virtual, the resources of the virtual PUSCH can be specified by the specification. The UE calculates the transmission power of the corresponding virtual PUSCH and takes the virtual PUSCH into account during $P_{CMAX}$ configuration and PH calculation. If UE only transmits signals on a PUSCH and the PUCCH is virtual, the resources of the virtual PUCCH can be specified by the specification. The UE calculates the transmission power of the corresponding virtual PUCCH and takes the virtual PUCCH into account during $P_{CMAX}$ configuration and PH calculation. Definition of virtual PUSCH and/or PUCCH can include but not limited to the frequency domain position, the size and the transmission format of the resource (such as MCS of PUSCH and transmission format of PUCCH, etc.).

Embodiment IV

The embodiment IV of the present invention provides a method for reporting power headroom and a UE supports carrier aggregation through one power amplifier and transmits PUSCH on multiple carriers.
A UE that supports carrier aggregation can use one PA (Power Amplifier) to transmit signals on aggregated carriers in certain cases (such as aggregated carriers on a same band). For example, for a UE supporting transmitting signals on two carriers through one PA, if the UE transmits a PUSCH from PRB x to PRB x+n on a carrier 1 and a PUSCH from PRB y to PRB y+m on a carrier 2 in subframe i, the UE sets $P_{CMAX}$ value as $P_{CMAX}(i)$ accordingly. If the UE calculates the PH according to the subframe i, then $PH(i) = P_{CMAX}(i) - P_{PUSCH}(i,1) - P_{PUSCH}(i,2)$, wherein $P_{PUSCH}(i,1)$ represents the transmission power of the PUSCH on carrier 1 in the subframe i and $P_{PUSCH}(i,2)$ represents the transmission power of the PUSCH on carrier 2 in the subframe i. UE reports $P_{CMAX}(i)$ together with PH(i) at the same time. The aforementioned $P_{CMAX}(i)$ can either be same or different for different carriers. Therefore, the $P_{CMAX}(i)$ can be more broadly defined as $P_{CMAX}(i,k)$, wherein k is carrier index.

Embodiment V

The embodiment V of the present invention provides a method for reporting power headroom and a UE supports carrier aggregation through one power amplifier and transmits PUCCH on a carrier and PUSCH on at least another carrier.

Specifically, a UE that supports carrier aggregation can use one PA to transmit signals on aggregated carriers in certain cases (such as aggregated carriers on a same band). For example, for a UE supporting transmitting signals on two carriers through one PA, if the UE transmits a PUCCH on PRB x on carrier 1 and a PUSCH from PRB y to PRB y+m on carrier 2 in subframe i, the UE sets $P_{CMAX}$ value as $P_{CMAX}(i)$ accordingly. If the UE calculates the PH according to subframe i, then $PH(i) = P_{CMAX}(i) - P_{PUSH}(i,1) - P_{PUSH}(i,2)$, wherein $P_{PUCCH}(i,1)$ represents the transmission power of the PUCCH on carrier 1 in the subframe i and $P_{PUSCH}(i,2)$ represents the transmission power of the PUSCH on carrier 2 in subframe i. UE reports $P_{CMAX}(i)$ together with PH(i) at the same time.

It is noted that the PUCCH and/or PUSCH can be virtual. That is to say, the UE may only transmit signals on the PUCCH or the PUSCH. If UE only transmits signals on PUCCH and the PUSCH is virtual, the resources of the virtual PUSCH can be specified by the specification. The UE calculates the transmission power of the corresponding virtual PUSCH and takes the virtual PUSCH into account during $P_{CMAX}$ configuration and PH calculation. If UE only transmits signals on PUSCH and the PUCCH is virtual, the resources of the virtual PUCCH can be specified by the specification. The UE calculates the transmission power of the corresponding virtual PUCCH and takes the virtual PUCCH into account during $P_{CMAX}$ configuration and PH calculation. Definition of virtual PUSCH and/or PUCCH can include but not limited to the frequency domain position, the size and the transmission format of the resource (such as MCS of PUSCH and transmission format of PUCCH, etc.). The aforementioned $P_{CMAX}(i)$ can either be same or different for different carriers. Therefore, the $P_{CMAX}(i)$ can be more broadly defined as $P_{CMAX}(i,k)$, wherein k is carrier index.

Embodiment VI

The embodiment VI of the present invention provides a method for reporting power headroom and a UE supports carrier aggregation through a plurality of power amplifiers. Specifically, a UE requires a plurality of PA to support carrier aggregation in certain cases (such as the frequency separation between the aggregated carriers aggregated is large). The UE sets different $P_{CMAX}$ values as $P_{CMAX}(i,k)$ for different PAs, wherein i represents the subframe index, k represents PA index or carrier index. The UE feeds back the corresponding $P_{CMAX}$ value when feeding back the PH of different PAs or carriers.

Embodiment VII

The embodiment VII of the present invention provides a device for reporting power headroom, as shown in Fig. 2, which comprises:

A configuration module 11, used to configure a maximum transmission power (Pcmax);

A calculation module 12, used to calculate a power headroom (PH) using the Pcmax;

A reporting module 13, used to report the Pcmax and the PH to a base station.

The configuration module 11 is also used to determine the value of Pcmax according to a PUSCH resource allocated in a reference subframe on a carrier.

The configuration module 11 is also used to determine the value of Pcmax according to a PUSCH resource and a PUCCH resource allocated in a reference subframe on a carrier.

The configuration module 11 is also used to determine the value of Pcmax according to a PUCCH resource allocated in a reference subframe on a carrier and a PUSCH resource allocated on at least another carrier in the reference subframe.

Accordingly, as shown in Fig. 3, the device also comprises:

A transmission module 14, used to transmit signal on PUCCH and/or PUSCH.

The configuration module 11 is also used to determine the value of Pcmax according to a PUSCH resource allocated in a reference subframe on at least two carriers.

The calculation module 12 is also used to obtain the PH by subtracting the transmission power of a PUSCH from the Pcmax. The PUSCH is transmitted on one or more carriers.

The calculation module 12 is also used to obtain the PH by subtracting the transmission power of a PUSCH and a PUCCH from the Pcmax. The PUCCH and PUSCH are transmitted on one or more carriers.

The reporting module 13 is also used to report the Pcmax and the PH to a base station through the same subframe.

Embodiment VIII

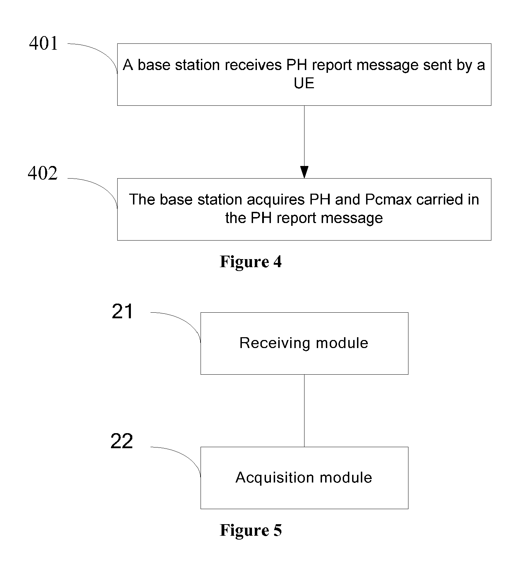

The embodiment VIII of the present invention provides a method for obtaining power headroom, as shown in Fig. 4, which comprises:

Step 401, a base station receives PH report message sent by a UE;

Step 402, the base station acquires the PH and the Pcmax carried in the PH report message.

The Pcmax and the PH are determined according to the same subframe. The base station can further use the PH accurately according to the Pcmax after acquiring the PH and the Pcmax. For example, the base station can derive the real PH according to the Pcmax and the PH reported by the UE even if the UE changes the value of Pcmax in the next time when the base station schedules the UE.

Embodiment IX

The embodiment IX of the present invention provides a base station, as shown in Fig.5, which comprises:

A receiving module 21, used to receive a PH report message sent by the UE.

An acquisition module 22, used to acquire a PH and a Pcmax carried in the PH report message.
The Pcmax and the PH are determined according to the same subframe.

In embodiments of the present invention, the UE calculates a PH by using the configured Pcmax and reports the Pcmax and the PH to the base station, so that the base station can acquire the Pcmax and PH at the same time, and then use the PH accurately according to the Pcmax.

With the description of the preferred embodiments herein above, those skilled in the art can clearly understand that the present invention can be realized with the aid of software and necessary commonly used hardware platforms, or the aid of hardware of course, but the former is a preferred embodiment in most cases. Based on this understanding, the technical proposal of the present invention or the part contributing to the present technology can be reflected in the form of a software product, which is saved in a memory medium comprising instructions to enable a terminal equipment, which could be a personal computer, a server or a network device, to carry out the methods for each embodiment of the present invention.

Technical personnel of the field can understand that the drawings only refer to the diagram of a preferred embodiment, and the module or procedure is not necessary for the implementation of the embodiments of the present invention.

Technical personnel of the field can understand that the module in the unit of an embodiment can be allocated in such unit based on embodiment description, or located in one or more units of another embodiment through corresponding changes. Modules of the embodiments mentioned above can be merged into one module, or further divided into a plurality of submodules.

The number of the aforementioned embodiments of the present invention is only used for description rather than for representing advantages or disadvantages.

Only several specific embodiments of the present invention are released above. However, the present invention is not only comprised of those. Any change that technical personnel of the field can predict shall be protected by the present invention.

**Claims**

1. A method for reporting power headroom, comprising:

A User Equipment UE configuring a maximum transmit power Pcmax;
The UE using the Pcmax to calculate a power headroom PH;
The UE reporting the Pcmax and the PH to a base station.

2. The method of claim 1, wherein the UE configuring a Pcmax further comprises:

   The UE determining the value of Pcmax according to a Physical Uplink Shared Channel PUSCH resource allocated in a reference subframe on a carrier.

3. The method of claim 1, wherein the UE configuring a Pcmax further comprises:

   The UE determining the value of Pcmax according to a PUSCH resource and a Physical Uplink Control Channel PUCCH resource allocated in a reference subframe on a carrier.

4. The method of claim 1, wherein the UE configuring a Pcmax further comprises:

   The UE determining the value of Pcmax according to a PUCCH resource allocated in a reference subframe on a carrier and a PUSCH resource allocated on at least another carrier in the reference subframe.

5. The method of claims 3 or 4, wherein the UE transmits signal on the PUCCH and/or on the PUSCH.

6. The method of claim 1, wherein the UE configuring a Pcmax further comprises:

   The UE determining the value of Pcmax according to PUSCH resources allocated in a subframe on at least two carriers.

7. The method of claim 1, wherein the PH is obtained specifically by subtracting the transmission power of a PUSCH from the Pcmax.

8. The method of claim 7, wherein the PUSCH is transmitted on one or more carriers.

9. The method of claim 1, wherein the PH is obtained specifically by subtracting the transmission power of a PUSCH and a PUCCH from the Pcmax.

10. The method of claim 9, wherein the PUCCH and the PUSCH are transmitted on one or more carriers.

11. The method of claim 1, wherein the Pcmax and the PH are determined according to the same subframe.

12. The method of claim 1 or 11, wherein the UE reports the Pcmax and the PH to a base station through the same subframe.

13. The method of any of the claims 2, 3, 4 and 6, wherein the resource of the PUSCH at least comprises the size and the frequency domain position of the PUSCH.

14. The method of claim 3 or claim 4, wherein the resource of the PUCCH at least comprises the size and the frequency domain position of the PUCCH.

15. A device for reporting power headroom, comprising:

   A configuration module, used to configure a Pcmax;
   A calculation module, used to calculate a PH using the Pcmax;
   A reporting module, used to report the Pcmax and the PH to a base station.

16. The device of claim 15, wherein the configuration module is also used to:

   Determine the value of Pcmax according to the PUSCH resource allocated in a reference subframe on a carrier.

17. The device of claim 15, wherein the configuration module is also used to:

   Determine the value of Pcmax according to a PUSCH resource and a PUCCH resource allocated in a reference subframe on a carrier.

**18.** The device of claim 15, wherein the configuration module is also used to:

Determine the value of Pcmax according to a PUCCH resource allocated in a reference subframe on a carrier and a PUSCH resource allocated on at least another carrier in the reference subframe;

**19.** The device of claim 17 or claim 18, further comprises:

A transmission module, used to transmit signal on the PUCCH and/or the PUSCH.

**20.** The device of claim 15, wherein the configuration module is also used to:

Determine the value of Pcmax according to a PUSCH resource allocated in a reference subframe on at least two carriers.

**21.** The device of claim 15, wherein the calculation module is also used to:

Obtain the PH by subtracting the transmission power of a PUSCH from the Pcmax.

**22.** The device of claim 21, wherein the PUSCH is transmitted on one or more carriers.

**23.** The device of claim 15, wherein the calculation module is also used to:

Obtain the PH by subtracting the transmission power of a PUSCH and a PUCCH from the Pcmax.

**24.** The device of claim 23, wherein the PUCCH and the PUSCH are transmitted on one or more carriers.

**25.** The device of claim 15, wherein the reporting module is also used to:

Report the Pcmax and the PH to the base station through the same subframe.

**26.** A method for acquiring power headroom, comprising:

A base station receiving PH report message sent by a UE, and acquiring a PH and a Pcmax carried in the PH report message.

**27.** The method of claim 26, wherein the Pcmax and the PH are determined according to the same subframe.

**28.** A base station, comprising:

A receiving module, used to receive the PH report message sent by the UE;
An acquisition module, used to acquire a PH and a Pcmax carried in the PH report message.

**29.** The base station of claim 28, wherein the Pcmax and the PH are determined according to the same subframe.

```
                                                           101
  ┌────────────────────────────────────────────┐  ⌐
  │  The UE configures a maximum transmission power │
  │                    Pcmax                    │
  └────────────────────────────────────────────┘
                        │
                        ▼
                                                           102
  ┌────────────────────────────────────────────┐  ⌐
  │  The UE calculates transmission power headroom  │
  │            (PH) by using the Pcmax            │
  └────────────────────────────────────────────┘
                        │
                        ▼
                                                           103
  ┌────────────────────────────────────────────┐  ⌐
  │  The UE reports the Pcmax and the PH to a base  │
  │                    station                   │
  └────────────────────────────────────────────┘
```

**Figure 1**

```
        11                    12                    13
   ┌──────────────┐      ┌──────────────┐      ┌──────────────┐
   │ Configuration│──────│  Calculation │──────│  Reporting   │
   │    module    │      │    module    │      │    module    │
   └──────────────┘      └──────────────┘      └──────────────┘
```

**Figure 2**

```
      14                 11                12                13
 ┌──────────────┐  ┌──────────────┐  ┌──────────────┐  ┌──────────────┐
 │ Transmission │──│ Configuration│──│  Calculation │──│  Reporting   │
 │    module    │  │    module    │  │    module    │  │    module    │
 └──────────────┘  └──────────────┘  └──────────────┘  └──────────────┘
```

**Figure 3**

401 — 

A base station receives PH report message sent by a UE

402 — 

The base station acquires PH and Pcmax carried in the PH report message

**Figure 4**

21 — 

Receiving module

22 — 

Acquisition module

**Figure 5**

# INTERNATIONAL SEARCH REPORT

| | International application No. |
| --- | --- |
| | PCT/CN2011/078086 |

### A. CLASSIFICATION OF SUBJECT MATTER

H04W 52/00 (2009.01) i

According to International Patent Classification (IPC) or to both national classification and IPC

### B. FIELDS SEARCHED

Minimum documentation searched (classification system followed by classification symbols)

IPC: H04W 24/-, H04W 52/-

Documentation searched other than minimum documentation to the extent that such documents are included in the fields searched

Electronic data base consulted during the international search (name of data base and, where practicable, search terms used)

CNABS,CNKI,VEN: headroom, power, transmission, transmit+, max, maximum, threshold, carrier, resource?, subframe

### C. DOCUMENTS CONSIDERED TO BE RELEVANT

| Category* | Citation of document, with indication, where appropriate, of the relevant passages | Relevant to claim No. |
| --- | --- | --- |
| X | CN101715207A (ZTE CORPORATION) 26 May 2010（26.05.2010）description, paragraphs 39-53, 87, 96 | 1-29 |
| X | CN101778416A（ZTE CORPORATION）14 Jul. 2010（14.07.2010）Description, page 5 line 1 to page 14 line 5 | 1-29 |
| X | US2008084848A1（NORTEL NETWORKS LTD.）10 Apr. 2008（10.04.2008）description, paragraphs 12-23 | 1，15，26，28 |
| A | The same as above | 2-14，16-25，27，29 |
| X | CN101299885A（MITSUBISHI ELECTRIC CORPORATION）05 Nov. 2008（05.11.2008） | 1，15，26，28 |
| A | The same as above | 2-14，16-25，27，29 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 24 Oct. 2011（24.10.2011） | 03 Nov. 2011 (03.11.2011) |
| Name and mailing address of the ISA/CN The State Intellectual Property Office, the P.R.China 6 Xitucheng Rd., Jimen Bridge, Haidian District, Beijing, China 100088 Facsimile No. (86-10)62019451 | Authorized officer GAO，Shengkai Telephone No. (86-10) 62411425 |

Form PCT/ISA /210 (second sheet) (July 2009)

## INTERNATIONAL SEARCH REPORT

International application No.

PCT/CN2011/078086

C (Continuation). DOCUMENTS CONSIDERED TO BE RELEVANT

| Category* | Citation of document, with indication, where appropriate, of the relevant passages | Relevant to claim No. |
|---|---|---|
| A | CN101340622A （ZTE CORP.） 07 Jan. 2009 （07.01.2009） <br> the whole document | 1-29 |

Form PCT/ISA /210 (continuation of second sheet ) (July 2009)

## INTERNATIONAL SEARCH REPORT
### Information on patent family members

| | International application No. |
|---|---|
| | PCT/CN2011/078086 |

| Patent Documents referred in the Report | Publication Date | Patent Family | Publication Date |
|---|---|---|---|
| CN101715207A | 26.05.2010 | WO2010149103A1 | 29.12.2010 |
| CN101778416A | 14.07.2010 | WO2011097878A1 | 18.08.2011 |
| US2008084848A1 | 10.04.2008 | EP1912345A1 | 16.04.2008 |
| CN101299885A | 05.11.2008 | NONE | |
| CN101340622A | 07.01.2009 | NONE | |

Form PCT/ISA /210 (patent family annex) (July 2009)

**EP 2 605 597 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2010102504870